# EUROPÄISCHE PATENTANMELDUNG

(11) **EP 1 203 975 A2**
(43) Veröffentlichungstag der Anmeldung: **08.05.2002**
(21) Anmeldenummer: 01124181.7
(22) Anmeldetag: 11.10.2001
(51) Int. Cl.: G02B 13/08, G02B 27/09

(54) **Vorrichtung zur Abbildung modulierten Lichts auf ein thermisch sensitives Medium**

(30) Priorität: 06.11.2000 DE 10054950
(71) Anmelder: Lissotschenko, Vitalij, 44149 Dortmund (DE); Hentze, Joachim, 59457 Werl (DE)
(72) Erfinder: Davydenko, Vladimir, 44149 Dortmund (DE)
(74) Vertreter: Basfeld, Rainer, Dr. Dipl.-Phys.

(57) **Zusammenfassung**

Vorrichtung zur Abbildung modulierten Lichts auf ein thermisch sensitives Medium umfassend Linsenmittel (4, 5, 6), die den Strahlquerschnitt (3) eines aus einer Modulatorebene (1) austretenden Lichtstrahls (2) auf die Oberfläche des thermisch sensitiven Mediums abbilden können, wobei die Linsenmittel (4, 5, 6) derart ausgebildet sind, daß der Strahlquerschnitt (3) des aus der Modulatorebene (1) austretenden Lichtstrahls (2) in einer ersten Richtung (x) stärker vergrößert bzw. schwächer verkleinert auf die Oberfläche abgebildet werden kann als in einer zweiten Richtung (y), wobei weiterhin zumindest während der Zeitdauer der Bestrahlung der Oberfläche des thermisch sensitiven Mediums mit dem durch die Linsenmittel (4, 5, 6) abgebildeten Lichtstrahl (7) die Oberfläche in der zweiten Richtung (y) bewegt werden kann.

## Beschreibung

Die vorliegende Erfindung betrifft eine Vorrichtung zur Abbildung modulierten Lichts auf ein thermisch sensitives Medium umfassend Linsenmittel, die den Strahlquerschnitt eines aus einer Modulatorebene austretenden Lichtstrahls auf die Oberfläche des thermisch sensitiven Mediums abbilden können.

Vorrichtungen der vorgenannten Art sind hinlänglich bekannt und dienen zur Abbildung eines beispielsweise mit Druckinformationen modulierten Lichts auf die thermisch sensitive Oberfläche einer Druckwalze oder dergleichen. In der Regel wird dabei der Strahlquerschnitt des auf die Oberfläche des thermisch sensitiven Mediums abgebildeten Lichtstrahls quadratisch sein, so daß Bildpixel mit einem quadratischen Umriß entstehen. Alternativ dazu gibt es auch Abbildungsvorrichtungen, die einen kreisförmigen Umriß des Bildpixels erzeugen. Das Vorsehen symetrischer, nämlich quadratischer oder kreisförmiger Umrisse eines Bildpixels ist für die Erstellung eines Bildes mit einer hohen Auflösung beinahe unverzichtbar.

Andererseits werden jedoch in letzter Zeit neue thermisch sensitive Medien, insbesondere sogenannte prozeßlose Medien, für Druckvorrichtungen und dergleichen verwendet, die zwar eine sehr hohe Auflösung zulassen, andererseits aber eine relativ geringe Sensitivität für den zu erzielenden thermischen Umwandlungsprozeß aufweisen.

Das der vorliegenden Erfindung zugrundeliegende Problem ist die Schaffung einer Vorrichtung der eingangs genannten Art, bei der bei Beibehaltung symetrischer Bildpixel einer höhere Leistung pro Fläche übertragen werden kann, so daß auch thermisch sensitive Medien mit einer geringeren Sensitivität verwendet werden können.

Dies wird erfindungsgemäß dadurch erreicht, daß die Linsenmittel derart ausgebildet sind, daß der Strahlquerschnitt des aus der Modulatorebene austretenden Lichtstrahls in einer ersten Richtung stärker vergrößert bzw. schwächer verkleinert auf die Oberfläche abgebildet werden kann als in einer zweiten Richtung, wobei weiterhin zumindest während der Zeitdauer der Bestrahlung der Oberfläche des thermisch sensitiven Mediums mit dem durch die Linsenmittel abgebildeten Lichtstrahl die Oberfläche in der zweiten Richtung bewegt werden kann. Hierbei können vorzugsweise die erste Richtung und die zweite Richtung zueinander und der Ausbreitungsrichtung des Lichtstrahles im wesentlichen senkrecht sein. Es besteht erfindungsgemäß die Möglichkeit, daß während der Zeitdauer der Bestrahlung die Oberfläche nur in der zweiten Richtung bewegt wird. Alternativ dazu kann die Oberfläche auch in einer Richtung bewegt werden, bei der die Bewegung eine Bewegungskomponente in der zweiten Richtung aufweist. Die Vorrichtung kann insbesondere so gestaltet sein, daß der Strahlquerschnitt des aus der Modulatorebene austretenden Lichtstrahls im wesentlichen quadratisch ist und daß durch die unterschiedliche Vergrößerung in der ersten Richtung und der zweiten Richtung der Strahlquerschnitt des auf die Oberfläche auftreffenden Lichtstrahls rechteckig ist, wobei die Geschwindigkeit der Bewegung der Oberfläche in der zweiten Richtung derart gewählt werden kann, daß der während der Zeitdauer der Bestrahlung von dem Lichtstrahl mit rechteckigen Querschnitt bestrahlte Oberflächenausschnitt quadratisch ist. Dadurch wird erreicht, daß zwar insgesamt ein einem Bildpixel entsprechender quadratischer Oberflächenausschnitt von dem Lichtstrahl überstrichen wird, dieser Lichtstrahl aber eine rechteckige und wesentlich geringere Fläche aufweist als der letztlich gesamte überstrichene Oberflächenausschnitt. Daher wird zu dem Zeitpunkt der jeweiligen Bestrahlung jeweils mehr Leistung pro Fläche auf das thermisch sensitive Medium übertragen als bei einem Lichtstrahl mit quadratischem Querschnitt. Es können also erfindungsgemäß thermisch sensitive Medien mit geringerer Sensitivität verwendet werden, weil die in jedem Zeitpunkt übertragene Leistung pro Fläche segnifikant erhöht werden kann.

Gemäß bevorzugter Ausführungsformen der vorliegenden Erfindung kann die Bewegung der Oberfläche in der zweiten Richtung dadurch erzielt werden, daß die Oberfläche auf einer walzenförmigen Trägervorrichtung angeordnet ist, wobei durch Drehung der Trägervorrichtung um ihre Walzenachse die Oberfläche in der zweiten Richtung bewegt werden kann. Alternativ dazu kann die Bewegung der Oberfläche in der zweiten Richtung durch eine lineare Bewegung einer die Oberfläche tragenden Trägervorrichtung erzielt werden.

Gemäß einer bevorzugten Ausführungsform der vorliegenden Erfindung umfassen die Linsenmittel Zylinderlinsenelemente. Hierbei können die Zylinderachsen der Zylinderlinsenelemente in der ersten Richtung ausgerichtet sein. Vorteilhafterweise umfassen die Linsenmittel eine konvexe Zylinderlinsenfläche auf einem ersten Zylinderlinsenelement, eine konkave Zylinderlinsenfläche auf einem zweiten Zylinderlinsenelement und ein sphärisches zwischen den beiden Zylinderlinsenelementen angeordnetes Linsenelement, das zumindest eine konvexe Fläche aufweist. Hierbei kann das in Strahlrichtung hinter der Modulatorebene gelegene erste Zylinderlinsenelement als plankonvexes Zylinderlinsenelement ausgeführt sein, wobei das sich daran anschließende sphärische Linsenelement als Bikonvexlinse ausgeführt ist und das sich in Strahlrichtung daran anschließende zweite Zylinderlinsenelement als plankonkave Zylinderlinse ausgeführt ist. Durch eine derartige Anordnung kann mit einfachen Mitteln eine stärkere Vergrößerung in einer ersten Richtung als in einer zweiten Richtung erzielt werden.

Es besteht die Möglichkeit sowohl Modulatoren, die in einer Transmissionsanordnung betrieben werden können, als auch Modulatoren zu verwenden, die in einer Reflexionsanordnung betrieben werden können.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Seitenansicht einer erfindungsgemäßen Vorrichtung;
- Fig. 2: eine um 90° gedrehte Seitenansicht der Vorrichtung gemäß Figur 1;
- Fig. 3: eine Ansicht gemäß dem Pfeil III in Figur 1;
- Fig. 4: eine Ansicht gemäß dem Pfeil IV in Figur 1;
- Fig. 5: eine skizzenhafte Ansicht eines Ausführungsbeispiels einer Trägervorrichtung für ein thermisch sensitives Medium;
- Fig. 6: eine Detailansicht gemäß dem Pfeil VI in Figur 5.

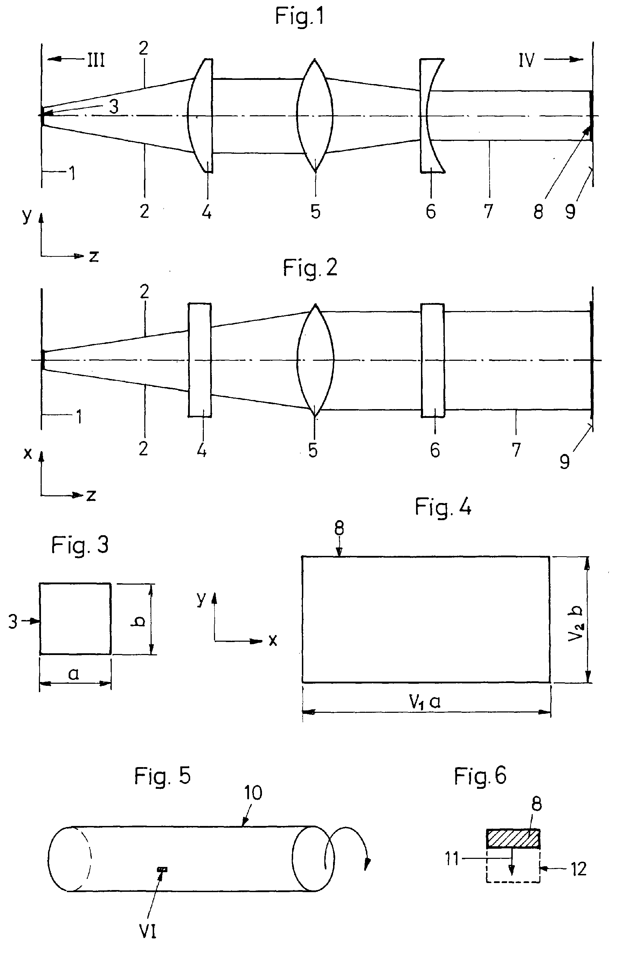

Die in Figur 1 und Figur 2 abgebildeten erfindungsgemäßen Vorrichtungen zur Abbildung modulierten Lichts auf ein thermisch sensitives Medium sind schematische Abbildungen, die wesentliche Bestandteile erfindungsgemäßer Vorrichtungen verdeutlichen sollen. In den Abbildungen ist jeweils ein Koordinatenkreuz zur besseren Orientierung vorgesehen.

Jeweils links in Figur 1 und Figur 2 ist eine Modulatorebene 1 dargestellt, aus der ein Strahl 2 modulierten Lichts in z-Richtung austritt. Erfindungsgemäß kann vorgesehen sein, dass das Licht beispielsweise eines Laserdiodenbarrens geeignet und wie in der Regel aus dem Stand der Technik bekannt, auf einen optischen Modulator abgebildet wird. Aus dem optischen Modulator bzw. aus der Ebene der Modulation tritt der mit 2 bezeichnete Lichtstrahl aus. Hierbei kann der Modulator in einer Transmissions- oder in einer Reflexionsanordnung betrieben werden. Aus Figur 3 ist ersichtlich, dass der beispielhaft dargestellte Lichtstrahl 2 in der Modulatorebene 1 einen Strahlquerschnitt 3 aufweist, der quadratisch ist. Das bedeutet, dass die in Figur 3 angegebenen Abmessungen a und b gleich sind.

Wie aus Figur 1 und Figur 2 in der Zusammenschau ersichtlich ist, ist die beispielhaft angenommene Divergenz des aus der Modulatorebene 1 austretenden Strahls 2 in x-Richtung und in y-Richtung gleich groß. In z-Richtung, d. h., in Ausbreitungsrichtung des Lichtstrahles 2, sind hinter der Modulatorebene ein erstes Zylinderlinsenelement 4, ein sphärisches Linsenelement 5 und ein zweites Zylinderlinsenelement 6 angeordnet. Dabei ist das erste Zylinderlinsenelement 4 als plankonvexe Zylinderlinse ausgebildet. Das sphärische Linsenelement 5 ist als Bikonvexlinse ausgebildet. Das zweite Zylinderlinsenelement 6 ist als plankonkave Zylinderlinse ausgebildet. Diese Ausführungen der einzelnen Linsenelemente bzw. die Ausführungen der durch die Linsenelemente 4, 5, 6 gegebenen Objektivlinseneinheit ist als Beispiel anzusehen. Es können durchaus auch ähnliche Linsen Verwendung finden, die in ihrer Kombination die im folgenden noch näher zu erläuternde Wirkung erzielen.

Wie aus Figur 1 und Figur 2 ersichtlich ist, sind die Zylinderachsen des ersten und zweiten Zylinderlinsenelementes 4, 6 in x-Richtung ausgerichtet. Daher erfährt die x-Komponente (siehe Figur 2) des durch die Zylinderlinsenelemente 4, 6 hindurchtretenden Lichtstrahles 2 keine Ablenkung sondern lediglich einen minimalen, nicht eingezeichneten Strahlversatz. Die x-Komponente wird, wie dies aus Figur 2 deutlich ersichtlich ist, lediglich an dem sphärischen Linsenelement 5 derart gebrochen, dass der vor dem Eintritt in das sphärische Linsenelement 5 divergente Strahl 2 als sich in z-Richtung von dem sphärischen Linsenelement 5 parallel ausbreitender Strahl 7 austritt. Dahingegen erfährt die y-Komponente des Lichtstrahles 2 bei dem Durchtritt durch das erste und das zweite Zylinderlinsenelement 4, 6 ebenfalls eine Brechung, so dass der Lichtstrahl 7 nach dem Austritt aus dem zweiten Zylinderlinsenelement 6 auch hinsichtlich seiner y-Komponente parallel ist, wobei jedoch die Ausdehnung des Lichtstrahles 7 in y-Richtung geringer ist als die in x-Richtung. Dies ist besonders deutlich aus Figur 4 ersichtlich, die den Strahlquerschnitt 8 des Lichtstrahles 7 in der Abbildungsebene 9 darstellt. Die erfindungsgemäße Kombination der beiden Zylinderlinsenelemente 4, 6 und des sphärischen Linsenelements 5 bewirkt somit eine größere Vergrößerung V₁ in x-Richtung und eine gegenüber dieser kleinere Vergrößerung V₂ in y-Richtung. Dies ist durch die Bemaßung V₁a und V₂b in Figur 4 verdeutlicht. In der Abbildungsebene 9 soll sich erfindungsgemäß das thermisch sensitive Medium befinden, dass beispielsweise auf einer Trägervorrichtung 10 angebracht sein kann, die schematisch beispielhaft in Figur 5 abgebildet ist.

Die darin abgebildete Trägervorrichtung 10 stellt im wesentlichen eine Walze dar, die beispielsweise die Druckwalze eines Laserdruckers sein kann. In dem abgebildeten Ausführungsbeispiel kann die als Walze ausgeführte Trägervorrichtung 10 im Uhrzeigersinn um ihre Zylinderachse gedreht werden. Das in Figur 6 abgebildete Detail der Oberfläche der Trägervorrichtung 10 verdeutlicht, dass der in Figur 4 abgebildete Strahlquerschnitt 8 in der Abbildungsebene 9 in Form eines Rechteckes auf die aus dem thermisch sensitiven Medium gebildete Oberfläche der Trägervorrichtung 10 auftrifft. Durch die Drehung der Trägervorrichtung 10 wird der von dem Strahl 7 ausgeleuchtete Bereich der Oberfläche der Trägervorrichtung 10 längs des Pfeils 11 in Figur 6 vergrößert bis insgesamt während des Bestrahlungsvorgangs mit dem Lichtstrahl 7 ein quadratischer Ausschnitt 12, der in Figur 6 teilweise punktiert dargestellt ist, ausgeleuchtet wird.

Anstelle der Ausbildung der Trägervorrichtung 10 als Walze können auch andere Ausbildungen vorgesehen sein. Es besteht auch die Möglichkeit, die Bewegung der mit einem thermisch sensitiven Medium versehenen Oberfläche der Trägervorrichtung 10 durch eine lineare Verschiebung und nicht durch eine Drehung zu erzielen. Erfindungswesentlich ist die Tatsache, dass für die Ausleuchtung eines als Pixel für einen Druckvorgang oder dergleichen dienenden Oberflächenausschnittes 12 der Trägervorrichtung 10 ein Strahl 7 mit einem von der quadratischen Form abweichenden Strahlquerschnitt 8 gewählt wird, wobei dieser Strahlquerschnitt während der Dauer der Ausleuchtung über die gesamte Pixelfläche bewegt wird, so dass ein quadratischer Oberflächenausschnitt 12 entsteht. Nach Ausleuchtung einer derartigen quadratischen Pixelfläche in einer geeigneten Zeitdauer kann das nächste Pixel einer zu erstellenden Grafik oder dergleichen ausgeleuchtet werden. Alternativ dazu können auch durch entsprechende Strahlaufteilmittel oder dergleichen, die beispielsweise vor der Modulatorebene angeordnet sind, mehrere Pixelflächen oder alle Pixelflächen gleichzeitig ausgeleuchtet werden.

Durch die erfindungsgemäße Schrumpfung des eine Pixelfläche ausleuchtenden Strahlquerschnittes in Bewegungsrichtung der Oberfläche der Trägervorrichtung 10 für das thermisch sensitive Medium wird die übertragene Leistung pro Fläche erhöht, so dass insbesondere bei thermisch vergleichsweise wenig sensitiven Medien auch noch mit geringer Strahlintensität ein für die Auslösung eines Schreibvorganges oder dergleichen notwendiger Schwellenwert überschritten werden kann.

## Patentansprüche

1. Vorrichtung zur Abbildung modulierten Lichts auf ein thermisch sensitives Medium umfassend Linsenmittel (4, 5, 6), die den Strahlquerschnitt (3) eines aus einer Modulatorebene (1) austretenden Lichtstrahls (2) auf die Oberfläche des thermisch sensitiven Mediums abbilden können, **dadurch gekennzeichnet, daß** die Linsenmittel (4, 5, 6) derart ausgebildet sind, daß der Strahlquerschnitt (3) des aus der Modulatorebene (1) austretenden Lichtstrahls (2) in einer ersten Richtung (x) stärker vergrößert bzw. schwächer verkleinert auf die Oberfläche abgebildet werden kann als in einer zweiten Richtung (y), wobei weiterhin zumindest während der Zeitdauer der Bestrahlung der Oberfläche des thermisch sensitiven Mediums mit dem durch die Linsenmittel (4, 5, 6) abgebildeten Lichtstrahl (7) die Oberfläche in der zweiten Richtung (y) bewegt werden kann.

2. Vorrichtung nach Anspruch 1, **dadurch gekennzeichnet, daß** die erste Richtung (x) und die zweite Richtung (y) zueinander und zu der Ausbreitungsrichtung (z) des Lichtstrahles (7) im wesentlichen senkrecht sind.

3. Vorrichtung nach einem der Ansprüche 1 oder 2, **dadurch gekennzeichnet, daß** der Strahlquerschnitt (3) des aus der Modulatorebene (1) austretenden Lichtstrahls (2) im wesentlichen quadratisch ist und daß durch die unterschiedliche Vergrößerung in der ersten Richtung (x) und der zweiten Richtung (y) der Strahlquerschnitt (8) des auf die Oberfläche auftreffenden Lichtstrahls (7) rechteckig ist, wobei die Geschwindigkeit der Bewegung der Oberfläche in der zweiten Richtung (y) derart gewählt werden kann, daß der während der Zeitdauer der Bestrahlung von dem Lichtstrahl (7) mit rechteckigem Querschnitt (8) bestrahlte Oberflächenausschnitt (12) quadratisch ist.

4. Vorrichtung nach einem der Ansprüche 1 bis 3, **dadurch gekennzeichnet, daß** die Bewegung der Oberfläche in der zweiten Richtung (y) dadurch erzielt wird, daß die Oberfläche auf einer walzenförmigen Trägervorrichtung (10) angeordnet ist, wobei durch Drehung der Trägervorrichtung (10) um ihre Walzenachse die Oberfläche in der zweiten Richtung (y) bewegt werden kann.

5. Vorrichtung nach einem der Ansprüche 1 bis 3, **dadurch gekennzeichnet, daß** die Bewegung der Oberfläche in der zweiten Richtung (y) durch eine lineare Bewegung einer die Oberfläche tragenden Trägervorrichtung erzielt werden kann.

6. Vorrichtung nach einem der Ansprüche 1 bis 5, **dadurch gekennzeichnet, daß** die Linsenmittel Zylinderlinsenelemente (4, 6) umfassen.

7. Vorrichtung nach Anspruch 6, **dadurch gekennzeichnet, daß** die Zylinderachsen der Zylinderlinsenelemente (4, 6) in der ersten Richtung (x) ausgerichtet sind.

8. Vorrichtung nach einem der Ansprüche 6 oder 7, **dadurch gekennzeichnet, daß** die Linsenmittel eine konvexe Zylinderlinsenfläche auf einem ersten Zylinderlinsenelement (4), eine konkave Zylinderlinsenfläche auf einem zweiten Zylinderlinsenelement (6) und ein sphärisches zwischen den beiden Zylinderlinsenelementen (4, 6) angeordnetes Linsenelement (5) umfassen, das zumindestens eine konvexe Fläche aufweist.

9. Vorrichtung nach Anspruch 8, **dadurch gekennzeichnet, daß** das in Strahlrichtung hinter der Modulatorebene (1) gelegene erste Zylinderlinsenelement (4) als plankonvexes Zylinderlinsenelement ausgeführt ist, daß das sich daran anschließende sphärische Linsenelement (5) als Bikonvexlinse ausgeführt ist und daß das sich in Strahlrichtung (z) daran anschließende zweite Zylinderlinsenelement (6) als plankonkave Zylinderlinse ausgeführt ist.

10. Vorrichtung nach einem der Ansprüche 1 bis 9, **dadurch gekennzeichnet, daß** der Modulator in einer Transmissions-oder in einer Reflexionsanordnung betrieben werden kann.
